# EUROPEAN PATENT APPLICATION

(11) **EP 4 741 161 A1**
(43) Date of publication of application: **13.05.2026**
(21) Application number: 24845564.4
(22) Date of filing: 19.07.2024
(51) Int. Cl.: B32B 27/32, B32B 7/027

(54) **MULTI-LAYER POLYETHYLENE FILM**

(30) Priority: 27.07.2023 JP 2023122185
(71) Applicant: Toppan Holdings Inc., Tokyo 110-0016 (JP); TAMAPOLY CO., LTD., Tokyo 171-0022 (JP)
(72) Inventor: KATO Ryoji, Tokyo 110-0016 (JP); TAKEI Ryo, Tokyo 110-0016 (JP); KAMEGAWA Yuki, Tokyo 110-0016 (JP); YAMAMURA Takehide, Tokyo 171-0022 (JP); YAMASHITA Yuki, Tokyo 171-0022 (JP)
(74) Representative: Wagner & Geyer
(86) International application number: PCT/JP2024/026023
(87) International publication number: WO 2025/023188

(57) **Abstract**

A multi-layer polyethylene film is a multi-layer polyethylene film comprising at least three layers of a first layer, a second layer, and a third layer in this order, wherein the softening point of the second layer is higher than the softening point of the first layer and higher than the softening point of the third layer, a ratio of the thickness of the second layer to the total thickness of the first layer and the third layer is 1 to 3, a temperature at the maximum of the melting peak observed in differential scanning calorimetry of the multi-layer polyethylene film is more than 129°C and less than 134°C, and an absolute value of the degree of molecular orientation of the multi-layer polyethylene film is less than 1.07.

## Description

### Technical Field

The present invention relates to a multi-layer polyethylene film.

### Background Art

Polyethylene films are excellent in flexibility, transparency, moisture resistance, chemical resistance, and the like, and are inexpensive, so they are used as packaging materials. In recent years, with the growing demand for a recycling-oriented society, attempts have been made to recycle packaging materials. One method for reusing a packaging material in which various materials are composited is to separate it into each material. However, since laminates used for packaging materials are given a predetermined strength, it is necessary to perform thermal, chemical, or mechanical techniques to separate each material, and the separated materials need to be sorted based on specific gravity, spectroscopic differences, etc., which was not efficient.

In order to recycle packaging materials more efficiently, mono-materialization, in which a laminate is composed of materials of the same type and the laminate is reused as a single material, is being studied. For example, Patent Literature 1 describes a laminate capable of realizing a packaging material having sufficient strength, heat resistance, and barrier properties applicable as a packaging material and the like, and also being excellent in recyclability, the laminate including a substrate, an adhesive layer, and a heat-seal layer, wherein the substrate and the heat-seal layer are composed of polyethylene, a vapor-deposited film is provided on at least one of between the substrate and the adhesive layer and between the heat-seal layer and the adhesive layer, and the substrate consists of a stretched film.

### Citation List

### Patent Literature

Patent Literature 1: Japanese Unexamined Patent Publication No. 2020-55157

### Summary of Invention

### Technical Problem

When the present inventors studied proceeding with mono-materialization of laminates, there were cases where wrinkles occurred in the polyethylene film depending on the type of polyethylene resin constituting each layer of the polyethylene film and the thickness of each layer, making it difficult to form functional layers such as a vapor-deposited layer and a coating layer. In addition, although stretching the polyethylene film could suppress the occurrence of wrinkles in the polyethylene film, adhesion tended to be inferior when joining with various films such as a sealant film.

Therefore, one aspect of the present invention aims to provide a multi-layer polyethylene film in which wrinkles are less likely to occur and adhesion is excellent.

### Solution to Problem

One aspect of the present invention relates to a multi-layer polyethylene film including at least three layers of a first layer, a second layer, and a third layer in this order, wherein the softening point (probe descent temperature) of the second layer is higher than the softening point (probe descent temperature) of the first layer and higher than the softening point (probe descent temperature) of the third layer, a ratio of the thickness of the second layer to the total thickness of the first layer and the third layer is 1 to 3, a temperature at the maximum of the melting peak observed in differential scanning calorimetry of the multi-layer polyethylene film is more than 129°C and less than 134°C, and an absolute value of the degree of molecular orientation of the multi-layer polyethylene film is less than 1.07.

The multi-layer polyethylene film has a multi-layer structure, and by adjusting the magnitude relationship of the softening point (probe descent temperature) of each layer and the ratio of the thickness, and adjusting the temperature at the maximum of the melting peak of the multi-layer polyethylene film and the degree of molecular orientation within predetermined ranges, wrinkles are less likely to occur and adhesion is excellent.

In the multi-layer polyethylene film, the melt flow rates at 190°C under a load of 2.16 kg of the polyethylene resins constituting the first layer, the second layer, and the third layer may all be 1.5 g/10 min or less from the viewpoint that wrinkles are less likely to occur and adhesion is more excellent. Further, in the multi-layer polyethylene film, when the melt flow rates at 190°C under a load of 2.16 kg of the polyethylene resins constituting the first layer, the second layer, and the third layer are designated as MFR₁, MFR₂, and MFR₃, respectively, MFR₁ - MFR₂ ≤ 0.55 g/10 min and MFR₃ - MFR₂ ≤ 0.55 g/10 min may be satisfied. Alternatively, MFR₂ - MFR₁ ≤ 0.55 g/10 min and MFR₂ - MFR₃ ≤ 0.55 g/10 min may be satisfied. By using polyethylene resins having a melt flow rate within a specific range as the polyethylene resins constituting each layer of the multi-layer polyethylene film, wrinkles are less likely to occur, and adhesion tends to be more excellent.

In the multi-layer polyethylene film, the density of the polyethylene resins constituting the first layer and the third layer may be less than 0.945 g/cm³. By using polyethylene resins having a density within a specific range as the polyethylene resins constituting the first layer and the third layer of the multi-layer polyethylene film, wrinkles are less likely to occur, and adhesion tends to be more excellent.

### Advantageous Effects of Invention

According to one aspect of the present invention, it is possible to provide a multi-layer polyethylene film in which wrinkles are less likely to occur and adhesion is excellent.

### Brief Description of Drawings

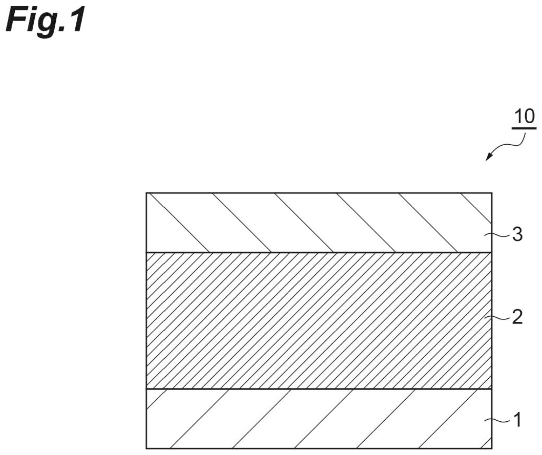

Fig. 1 is a cross-sectional view of a multi-layer polyethylene film according to an embodiment of the present invention.

### Description of Embodiments

Hereinafter, embodiments of the present disclosure will be described in detail with reference to the drawings. Note that the drawings are schematic, and for example, the relationship between thickness and planar dimensions and the ratio of the thickness of each layer differ from actual ones. In addition, the embodiments shown below exemplify configurations for embodying the technical idea of the present disclosure, and the technical idea of the present disclosure is not limited to the materials, shapes, structures, etc. of the components described below.

### <Multi-layer polyethylene film>

Fig. 1 is a cross-sectional view of a multi-layer polyethylene film according to an embodiment of the present invention. A multi-layer polyethylene film 10 includes three layers of a first layer 1, a second layer 2, and a third layer 3 in this order.

The content of the polyethylene resin in the multi-layer polyethylene film 10 may be 80 mass% or more, 90 mass% or more, or 95 mass% or more based on the total amount of the multi-layer polyethylene film 10, from the viewpoint of realizing mono-materialization and facilitating resin recycling.

The temperature at the maximum of the melting peak observed in differential scanning calorimetry of the multi-layer polyethylene film 10 is more than 129°C and less than 134°C. When the temperature at the maximum of the melting peak is more than 129°C, the heat resistance of the multi-layer polyethylene film 10 is excellent, so the film is less likely to be deformed by heat and wrinkles are less likely to occur. When the temperature at the maximum of the melting peak is less than 134°C, roughening of the surface of the multi-layer polyethylene film 10 can be suppressed, so processability when providing a functional layer such as a vapor-deposited layer or a coating layer is excellent, and adhesion is excellent. The temperature at the maximum of the melting peak may be 130°C or more, 131°C or more, 132°C or more, or 132.5°C or more from the viewpoint that the heat resistance of the multi-layer polyethylene film 10 is more excellent and wrinkles are less likely to occur. The temperature at the maximum of the melting peak may be 133.8°C or less or 133.5°C or less from the viewpoint of further suppressing roughening of the surface of the multi-layer polyethylene film 10. When a plurality of melting peaks exist, the temperature at the maximum of each melting peak is within the above range. The temperature at the maximum of the melting peak means a value measured by the method described in the Examples described later.

The absolute value of the degree of molecular orientation of the multi-layer polyethylene film 10 is less than 1.07. When the absolute value of the degree of molecular orientation is less than 1.07, cross-linking (high crystallization) of the polyethylene resin on the film surface is suppressed, so affinity with functional layers such as a vapor-deposited layer and a coating layer, adhesives, and adhesive resins is high, and excellent adhesion can be realized. The absolute value of the degree of molecular orientation may be 1.06 or less, and may be 1 or more, 1.02 or more, or 1.05 or more. From these viewpoints, the absolute value of the degree of molecular orientation may be 1 or more and less than 1.07, 1.02 or more and less than 1.07, 1.05 or more and less than 1.07, or 1 to 1.06. The absolute value of the degree of molecular orientation means a value measured by the method described in the Examples described later.

### <First layer>

The first layer 1 is a layer containing a first polyethylene resin. The content of the first polyethylene resin in the first layer 1 may be 80 mass% or more, 90 mass% or more, or 95 mass% or more based on the total amount of the first layer 1, or may be 100 mass% (in this case, the first layer 1 consists essentially of the first polyethylene resin), from the viewpoint of realizing mono-materialization and facilitating resin recycling.

The melt flow rate MFR₁ at 190°C under a load of 2.16 kg of the first polyethylene resin may be 5 g/10 min or less, 3 g/10 min or less, 1.5 g/10 min or less, 1 g/10 min or less, or 0.5 g/10 min or less from the viewpoint that the heat resistance of the multi-layer polyethylene film 10 is more excellent and wrinkles are less likely to occur, and from the viewpoint that adhesion is more excellent. The MFR₁ of the first polyethylene resin may be 0.1 g/10 min or more or 0.3 g/10 min or more from the viewpoint that wrinkles are less likely to occur and adhesion is more excellent. From these viewpoints, the MFR₁ of the first polyethylene resin may be 0.1 to 5 g/10 min, 0.3 to 5 g/10 min, 0.1 to 3 g/10 min, 0.1 to 1.5 g/10 min, 0.1 to 1 g/10 min, or 0.1 to 0.5 g/10 min. In the present specification, the melt flow rate means a value measured in accordance with JIS K6921-2.

The density of the first polyethylene resin may be 0.95 g/cm³ or less, 0.947 g/cm³ or less, or less than 0.945 g/cm³ from the viewpoint that high crystallization of the polyethylene resin is suppressed and adhesion is more excellent. The density of the first polyethylene resin may be 0.92 g/cm³ or more, 0.93 g/cm³ or more, or 0.94 g/cm³ or more from the viewpoint that wrinkles are less likely to occur and adhesion is more excellent. From these viewpoints, the density of the first polyethylene resin may be 0.92 to 0.95 g/cm³, 0.93 to 0.947 g/cm³, or 0.94 g/cm³ or more and less than 0.945 g/cm³.

The melting point of the first polyethylene resin may be 145°C or less, 140°C or less, or 135°C or less from the viewpoint that the heat resistance of the multi-layer polyethylene film 10 is more excellent and wrinkles are less likely to occur, and from the viewpoint that adhesion is more excellent. The melting point of the first polyethylene resin may be 110°C or more, 120°C or more, or 125°C or more from the viewpoint that wrinkles are less likely to occur and adhesion is more excellent. From these viewpoints, the melting point of the first polyethylene resin may be 110 to 145°C, 120 to 140°C, or 125 to 135°C.

The weight-average molecular weight Mw of the first polyethylene resin may be 1,000,000 or less, 500,000 or less, or 300,000 or less, and may be 10,000 or more, 20,000 or more, or 50,000 or more, from the viewpoint that wrinkles are less likely to occur and adhesion is more excellent. From these viewpoints, the weight-average molecular weight Mw of the first polyethylene resin may be 10,000 to 1,000,000, 20,000 to 500,000, or 50,000 to 300,000. In the present specification, the weight-average molecular weight and the number-average molecular weight described later mean values in terms of polystyrene standards measured by gel permeation chromatography (GPC).

The number-average molecular weight Mn of the first polyethylene resin may be 200,000 or less, 100,000 or less, or 50,000 or less, and may be 1,000 or more, 2,000 or more, or 4,000 or more, from the viewpoint that wrinkles are less likely to occur and adhesion is more excellent. From these viewpoints, the number-average molecular weight Mn of the first polyethylene resin may be 1,000 to 200,000, 2,000 to 100,000, or 4,000 to 50,000.

The molecular weight distribution Mw/Mn of the first polyethylene resin may be 100 or less, 50 or less, or 30 or less, and may be 2 or more, or 3 or more, from the viewpoint that wrinkles are less likely to occur and adhesion is more excellent. From these viewpoints, the molecular weight distribution Mw/Mn of the first polyethylene resin may be 2 to 100, 3 to 100, 2 to 50, or 2 to 30.

The first layer 1 may contain components other than the first polyethylene resin. The first layer 1 may contain, for example, a polyethylene resin other than the first polyethylene resin. Examples of the polyethylene resin other than the first polyethylene resin include polyethylene resins having different MFR, density, melting point, molecular weight, etc. from the first polyethylene resin. The first layer 1 may contain additives such as antioxidants, lubricants, anti-blocking agents, and antistatic agents.

The softening point (probe descent temperature) of the first layer 1 may be 120°C or more, 125°C or more, 130°C or more, or 133°C or more from the viewpoint that the heat resistance of the multi-layer polyethylene film 10 is more excellent and wrinkles are less likely to occur, and from the viewpoint that adhesion is more excellent. The softening point (probe descent temperature) of the first layer 1 may be 160°C or less, 155°C or less, 150°C or less, or 146°C or less. From these viewpoints, the softening point (probe descent temperature) of the first layer 1 may be 120 to 160°C, 125 to 155°C, 130 to 150°C, or 133 to 146°C.

The softening point (probe descent temperature) is a parameter related to local thermal analysis of a material using a probe, and is obtained by measuring the ascent and descent behavior of the probe. For the measurement of the probe descent temperature, an atomic force microscope (AFM) equipped with a cantilever (probe) having a heating mechanism and a nano-thermal microscope is used. When the cantilever is brought into contact with the surface of a solid sample fixed to a sample stage and heated by applying a voltage to the cantilever in a contact mode, the sample surface thermally expands and the cantilever rises. When the cantilever is further heated, the sample surface softens and the hardness changes significantly. As a result, the cantilever descends and penetrates into the sample surface. The starting point of the rapid displacement detected at this time is the probe descent starting point, and the softening point (probe descent temperature) can be obtained by converting the voltage into temperature. By such a method, the softening point (probe descent temperature) in the local and near-surface nanoscale region can be known.

Examples of usable AFMs include MPF-3D-SA and Ztherm system manufactured by Oxford Instruments, Nano Thermal Analysis series and nanoIR series manufactured by Bruker Japan, and the like. Even with AFMs from other manufacturers, measurement is possible if Nano Thermal Analysis is attached. Examples of the cantilever include AN2-200 manufactured by Anasys Instruments. As the cantilever, cantilevers other than the above-exemplified cantilever can be used as long as they can sufficiently reflect laser light and a voltage can be applied thereto.

The temperature range in the measurement of the softening point (probe descent temperature) varies depending on the material to be measured, but for example, the start temperature can be about 25°C, which is room temperature, and the end temperature can be about 400°C. In the present specification, the temperature range in the measurement of the softening point (probe descent temperature) can be in the range of 25°C or more and 300°C or less.

The spring constant of the cantilever may be 0.1 to 3.5 N/m, and is preferably 0.5 to 3.5 N/m in order to perform measurement in both tapping mode and contact mode. In AFM, the amount of deflection (Deflection) of the cantilever may be detected in units of voltage. In the contact mode, since the Deflection of the cantilever changes before and after contact between the cantilever and the sample, by keeping this amount of change within the range of 0.1 to 3.0 V, destruction of the sample surface can be suppressed while keeping the cantilever in contact with the sample.

The heating rate of the cantilever varies depending on the heating mechanism and the like, but may be 0.1 to 10 V/sec, and is preferably 0.2 to 5 V/sec. When the sample surface softens, the tip of the cantilever penetrates into the sample and descends. The penetration depth of the cantilever affects the detection sensitivity of the peak top of the softening curve, and can be 3 to 500 nm. From the viewpoint of preventing damage to the cantilever, the penetration depth is more preferably 5 to 100 nm.

In order to calculate the softening point (probe descent temperature), it is necessary to create a calibration curve. In the Examples described later, a calibration curve was created using polycaprolactone, low-density polyethylene, polypropylene, and polyethylene terephthalate as calibration samples. Details of the creation of the calibration curve will be described later. The material of the calibration sample is not limited to the above, and materials whose thermal conductivity is not significantly different from that of general polymers and whose melting points are around 60°C, around 250°C, and intermediate therebetween may be used at least one by one. For example, only three of polycaprolactone, low-density polyethylene, and polyethylene terephthalate, excluding polypropylene from the above four calibration samples, can be used as calibration samples.

The thickness of the first layer 1 may be 1 µm or more, 2 µm or more, 3 µm or more, 4 µm or more, or 5 µm or more from the viewpoint of improving processability, and may be 50 µm or less, 30 µm or less, 20 µm or less, or 10 µm or less from the viewpoint of thinning the packaging material. From these viewpoints, the thickness of the first layer 1 may be 1 to 50 µm, 2 to 30 µm, 3 to 20 µm, 4 to 10 µm, or 5 to 10 µm.

### <Third layer>

The third layer 3 is a layer containing a third polyethylene resin. The content of the third polyethylene resin in the third layer 3 may be 80 mass% or more, 90 mass% or more, or 95 mass% or more based on the total amount of the third layer 3, or may be 100 mass% (in this case, the third layer 3 consists essentially of the third polyethylene resin), from the viewpoint of realizing mono-materialization and facilitating resin recycling.

The melt flow rate MFR₃ at 190°C under a load of 2.16 kg of the third polyethylene resin may be 5 g/10 min or less, 3 g/10 min or less, 1.5 g/10 min or less, 1 g/10 min or less, or 0.5 g/10 min or less from the viewpoint that the heat resistance of the multi-layer polyethylene film 10 is more excellent and wrinkles are less likely to occur, and from the viewpoint that adhesion is more excellent. The MFR₃ of the third polyethylene resin may be 0.1 g/10 min or more or 0.3 g/10 min or more from the viewpoint that wrinkles are less likely to occur and adhesion is more excellent. From these viewpoints, the MFR₃ of the third polyethylene resin may be 0.1 to 5 g/10 min, 0.3 to 5 g/10 min, 0.1 to 3 g/10 min, 0.1 to 1.5 g/10 min, 0.1 to 1 g/10 min, or 0.1 to 0.5 g/10 min.

The density of the third polyethylene resin may be 0.95 g/cm³ or less, 0.947 g/cm³ or less, or less than 0.945 g/cm³ from the viewpoint that high crystallization of the polyethylene resin is suppressed and adhesion is more excellent. The density of the third polyethylene resin may be 0.92 g/cm³ or more, 0.93 g/cm³ or more, or 0.94 g/cm³ or more from the viewpoint that wrinkles are less likely to occur and adhesion is more excellent. From these viewpoints, the density of the third polyethylene resin may be 0.92 to 0.95 g/cm³, 0.93 to 0.947 g/cm³, or 0.94 g/cm³ or more and less than 0.945 g/cm³.

The melting point of the third polyethylene resin may be 145°C or less, 140°C or less, or 135°C or less from the viewpoint that the heat resistance of the multi-layer polyethylene film 10 is more excellent and wrinkles are less likely to occur, and from the viewpoint that adhesion is more excellent. The melting point of the third polyethylene resin may be 110°C or more, 120°C or more, or 125°C or more from the viewpoint that wrinkles are less likely to occur and adhesion is more excellent. From these viewpoints, the melting point of the third polyethylene resin may be 110 to 145°C, 120 to 140°C, or 125 to 135°C.

The weight-average molecular weight Mw of the third polyethylene resin may be 1,000,000 or less, 500,000 or less, or 300,000 or less, and may be 10,000 or more, 20,000 or more, or 50,000 or more, from the viewpoint that wrinkles are less likely to occur and adhesion is more excellent. From these viewpoints, the weight-average molecular weight Mw of the third polyethylene resin may be 10,000 to 1,000,000, 20,000 to 500,000, or 50,000 to 300,000.

The number-average molecular weight Mn of the third polyethylene resin may be 200,000 or less, 100,000 or less, or 50,000 or less, and may be 1,000 or more, 2,000 or more, or 4,000 or more, from the viewpoint that wrinkles are less likely to occur and adhesion is more excellent. From these viewpoints, the number-average molecular weight Mn of the third polyethylene resin may be 1,000 to 200,000, 2,000 to 100,000, or 4,000 to 50,000.

The molecular weight distribution Mw/Mn of the third polyethylene resin may be 100 or less, 50 or less, or 30 or less, and may be 2 or more, or 3 or more, from the viewpoint that wrinkles are less likely to occur and adhesion is more excellent. From these viewpoints, the molecular weight distribution Mw/Mn of the third polyethylene resin may be 2 to 100, 3 to 100, 2 to 50, or 2 to 30.

The third layer 3 may contain components other than the third polyethylene resin. The third layer 3 may contain, for example, a polyethylene resin other than the third polyethylene resin. Examples of the polyethylene resin other than the third polyethylene resin include polyethylene resins having different MFR, density, melting point, molecular weight, etc. from the third polyethylene resin. The third layer 3 may contain additives such as an antioxidant, a lubricant, an anti-blocking agent, and an antistatic agent.

The softening point (probe descent temperature) of the third layer 3 may be 120°C or more, 125°C or more, 130°C or more, or 133°C or more from the viewpoint that the heat resistance of the multi-layer polyethylene film 10 is more excellent and wrinkles are less likely to occur, and from the viewpoint that adhesion is more excellent. The softening point (probe descent temperature) of the third layer 3 may be 160°C or less, 155°C or less, 150°C or less, or 146°C or less from the viewpoint that wrinkles are less likely to occur and adhesion is more excellent. From these viewpoints, the softening point (probe descent temperature) of the third layer 3 may be 120 to 160°C, 125 to 155°C, 130 to 150°C, or 133 to 146°C.

The thickness of the third layer 3 may be 1 µm or more, 2 µm or more, 3 µm or more, 4 µm or more, or 5 µm or more from the viewpoint of improving processability, and may be 50 µm or less, 30 µm or less, 20 µm or less, or 10 µm or less from the viewpoint of thinning the packaging material. From these viewpoints, the thickness of the third layer 3 may be 1 to 50 µm, 2 to 30 µm, 3 to 20 µm, 4 to 10 µm, or 5 to 10 µm.

The third layer 3 may have the same structure as the first layer 1. That is, the multi-layer polyethylene film 10 may have a symmetrical structure with respect to the second layer 2. When the multi-layer polyethylene film 10 has a symmetrical structure, curling during the production of the multi-layer polyethylene film 10 can be suppressed, and the multi-layer polyethylene film 10 can be stably produced.

### <Second layer>

The second layer 2 is a layer containing a second polyethylene resin. The content of the second polyethylene resin in the second layer 2 may be 80 mass% or more, 90 mass% or more, or 95 mass% or more based on the total amount of the second layer 2, or may be 100 mass% (in this case, the second layer 2 consists essentially of the second polyethylene resin), from the viewpoint of realizing mono-materialization and facilitating resin recycling.

The melt flow rate MFR₂ at 190°C under a load of 2.16 kg of the second polyethylene resin may be 5 g/10 min or less, 3 g/10 min or less, 2 g/10 min or less, 1.5 g/10 min or less, or 1 g/10 min or less from the viewpoint that the heat resistance of the multi-layer polyethylene film 10 is more excellent and wrinkles are less likely to occur, and from the viewpoint that adhesion is more excellent. The MFR₂ of the second polyethylene resin may be 0.1 g/10 min or more, 0.5 g/10 min or more, or 0.8 g/10 min or more from the viewpoint that wrinkles are less likely to occur and adhesion is more excellent. From these viewpoints, the MFR₂ of the second polyethylene resin may be 0.1 to 5 g/10 min, 0.5 to 5 g/10 min, 0.8 to 5 g/10 min, 0.1 to 3 g/10 min, 0.1 to 2 g/10 min, 0.1 to 1.5 g/10 min, or 0.1 to 1 g/ 10 min.

The MFR₂ of the second polyethylene resin may be smaller than the MFR₁ of the first polyethylene resin and/or the MFR₃ of the third polyethylene resin from the viewpoint that the film-formability of the multi-layer polyethylene film 10 is excellent. The difference between the MFR₁ of the first polyethylene resin and the MFR₂ of the second polyethylene resin (MFR₁ - MFR₂) and/or the difference between the MFR₃ of the third polyethylene resin and the MFR₂ of the second polyethylene resin (MFR₃ - MFR₂) may be 0.8 g/10 min or less, 0.6 g/10 min or less, or 0.55 g/10 min or less from the viewpoint that the film-formability of the multi-layer polyethylene film 10 is excellent. MFR₁ - MFR₂ and/or MFR₃ - MFR₂ may be 0 g/10 min or more, or more than 0 g/10 min, from the viewpoint that wrinkles are less likely to occur and adhesion is more excellent. From these viewpoints, MFR₁ - MFR₂ and/or MFR₃ - MFR₂ may be 0 to 0.8 g/10 min, 0 to 0.6 g/10 min, or more than 0 g/10 min and 0.55 g/10 min or less.

The MFR₂ of the second polyethylene resin may be larger than the MFR₁ of the first polyethylene resin and/or the MFR₃ of the third polyethylene resin from the viewpoint that the film-formability of the multi-layer polyethylene film 10 is excellent. The difference between the MFR₁ of the first polyethylene resin and the MFR₂ of the second polyethylene resin (MFR₂ - MFR₁) and/or the difference between the MFR₃ of the third polyethylene resin and the MFR₂ of the second polyethylene resin (MFR₂ - MFR₃) may be 0.8 g/10 min or less, 0.6 g/10 min or less, or 0.55 g/10 min or less from the viewpoint that the film-formability of the multi-layer polyethylene film 10 is excellent. MFR₂ - MFR₁ and/or MFR₂ - MFR₃ may be 0 g/10 min or more, or more than 0 g/10 min, from the viewpoint that wrinkles are less likely to occur and adhesion is more excellent. From these viewpoints, MFR₂ - MFR₁ and/or MFR₂ - MFR₃ may be 0 to 0.8 g/10 min, 0 to 0.6 g/10 min, or more than 0 g/10 min and 0.55 g/10 min or less.

The density of the second polyethylene resin may be 0.99 g/cm³ or less, 0.98 g/cm³ or less, or less than 0.975 g/cm³ from the viewpoint that wrinkles are less likely to occur and adhesion is more excellent. The density of the second polyethylene resin may be 0.94 g/cm³ or more, 0.95 g/cm³ or more, or 0.96 g/cm³ or more from the viewpoint that wrinkles are less likely to occur and adhesion is more excellent. From these viewpoints, the density of the second polyethylene resin may be 0.94 to 0.99 g/cm³, 0.95 to 0.98 g/cm³, or 0.96 g/cm³ or more and less than 0.975 g/cm³.

The melting point of the second polyethylene resin may be 145°C or less, 140°C or less, or 135°C or less from the viewpoint that the heat resistance of the multi-layer polyethylene film 10 is more excellent and wrinkles are less likely to occur, and from the viewpoint that adhesion is more excellent. The melting point of the second polyethylene resin may be 110°C or more, 120°C or more, or 130°C or more from the viewpoint that wrinkles are less likely to occur and adhesion is more excellent. The melting point of the second polyethylene resin may be higher than the melting point of the first polyethylene resin and/or the melting point of the third polyethylene resin from the viewpoint that the heat resistance of the multi-layer polyethylene film 10 is excellent. From these viewpoints, the melting point of the second polyethylene resin may be 110 to 145°C, 120 to 140°C, or 130 to 135°C.

The weight-average molecular weight Mw of the second polyethylene resin may be 1,000,000 or less, 500,000 or less, or 300,000 or less, and may be 10,000 or more, 20,000 or more, or 50,000 or more, from the viewpoint that wrinkles are less likely to occur and adhesion is more excellent. From these viewpoints, the weight-average molecular weight Mw of the second polyethylene resin may be 10,000 to 1,000,000, 20,000 to 500,000, or 50,000 to 300,000.

The number-average molecular weight Mn of the second polyethylene resin may be 200,000 or less, 100,000 or less, or 50,000 or less, and may be 1,000 or more, 2,000 or more, or 4,000 or more, from the viewpoint that wrinkles are less likely to occur and adhesion is more excellent. From these viewpoints, the number-average molecular weight Mn of the second polyethylene resin may be 1,000 to 200,000, 2,000 to 100,000, or 4,000 to 50,000.

The molecular weight distribution Mw/Mn of the second polyethylene resin may be 100 or less, 50 or less, or 30 or less, and may be 2 or more, or 3 or more, from the viewpoint that wrinkles are less likely to occur and adhesion is more excellent. From these viewpoints, the molecular weight distribution Mw/Mn of the second polyethylene resin may be 2 to 100, 3 to 100, 2 to 50, or 2 to 30.

The second layer 2 may contain components other than the second polyethylene resin. The second layer 2 may contain, for example, a polyethylene resin other than the second polyethylene resin. Examples of the polyethylene resin other than the second polyethylene resin include polyethylene resins having different MFR, density, melting point, molecular weight, etc. from the second polyethylene resin. The second layer 2 may contain additives such as an antioxidant, a lubricant, an anti-blocking agent, and an antistatic agent.

The softening point (probe descent temperature) of the second layer 2 is higher than the softening point (probe descent temperature) of the first layer 1 and higher than the softening point (probe descent temperature) of the third layer 3. Since the softening point (probe descent temperature) of the second layer 2 is higher than the softening points (probe descent temperatures) of the first layer 1 and the third layer 3, the heat resistance of the multi-layer polyethylene film 10 is excellent, so the film is less likely to be deformed by heat and wrinkles are less likely to occur. The softening point (probe descent temperature) of the second layer 2 may be 125°C or more, 130°C or more, 135°C or more, 138°C or more, 140°C or more, or 142°C or more from the viewpoint that the heat resistance of the multi-layer polyethylene film 10 is more excellent and wrinkles are less likely to occur. The softening point (probe descent temperature) of the second layer 2 may be 170°C or less, 165°C or less, 160°C or less, 157°C or less, or 155°C or less from the viewpoint that wrinkles are less likely to occur and adhesion is more excellent. From these viewpoints, the softening point (probe descent temperature) of the second layer 2 may be 125 to 170°C, 130 to 165°C, 135 to 160°C, 138 to 157°C, 140 to 155°C, or 142 to 155°C.

The thickness of the second layer 2 may be 5 µm or more, 8 µm or more, 10 µm or more, 12 µm or more, or 15 µm or more from the viewpoint of the heat resistance of the multi-layer polyethylene film 10, and may be 80 µm or less, 50 µm or less, 40 µm or less, or 30 µm or less from the viewpoint of improving processability. From these viewpoints, the thickness of the second layer 2 may be 5 to 80 µm, 8 to 50 µm, 10 to 40 µm, 12 to 30 µm, or 15 to 30 µm.

The thickness of the second layer 2 may be larger than the thickness of the first layer 1 and the thickness of the third layer 3 from the viewpoint that the heat resistance of the multi-layer polyethylene film is excellent. The thickness of the second layer 2 may be 1.5 times or more, 2 times or more, or 3 times or more the thickness of the first layer 1 and/or the thickness of the third layer 3. The thickness of the second layer 2 may be 10 times or less, 9 times or less, or 8 times or less the thickness of the first layer 1 and/or the thickness of the third layer 3 from the viewpoint of improving processability. From these viewpoints, the thickness of the second layer 2 may be 1.5 to 10 times, 2 to 9 times, or 3 to 8 times the thickness of the first layer 1 and/or the thickness of the third layer 3.

A ratio of the thickness of the second layer 2 to the total thickness of the first layer 1 and the third layer 3 is 1 to 3. When the ratio is 1 or more, the heat resistance of the multi-layer polyethylene film 10 is excellent, so the film is less likely to be deformed by heat and wrinkles are less likely to occur. When the ratio is 3 or less, roughening of the surface of the multi-layer polyethylene film 10 can be suppressed, so processability when providing a functional layer such as a vapor-deposited layer or a coating layer is excellent, and adhesion is excellent. The ratio may be 1.2 or more, 1.5 or more, or 2 or more from the viewpoint that the heat resistance of the multi-layer polyethylene film 10 is more excellent and wrinkles are less likely to occur. The ratio may be 2.8 or less, 2.5 or less, or 2 or less from the viewpoint that the surface of the multi-layer polyethylene film tends to be smooth and roughening of the surface of the multi-layer polyethylene film 10 can be suppressed. From these viewpoints, the ratio may be 1 to 2.8, 1 to 2.5, 1 to 2, 1.2 to 3, 1.5 to 3, or 2 to 3.

The haze value of the multi-layer polyethylene film 10 may be 30% or less, 25% or less, or 20% or less from the viewpoint that transparency is excellent. In the present specification, the haze value means a value measured in accordance with JIS K 7136:2000.

The multi-layer polyethylene film 10 may include layers other than the three layers of the first layer 1, the second layer 2, and the third layer 3. The multi-layer polyethylene film 10 may further include, for example, another layer composed of a polyethylene resin other than the polyethylene resins constituting the first layer 1, the second layer 2, and the third layer 3. The multi-layer polyethylene film 10 may include an adhesive layer composed of an adhesive between each of the first layer 1, the second layer 2, and the third layer 3.

The method for producing the multi-layer polyethylene film 10 is not particularly limited, and it can be produced by a known method such as an air-cooled blown method, a water-cooled blown method, or a T-die cast method. From the viewpoint of versatility, the multi-layer polyethylene film 10 is preferably produced by a blown method, and more preferably produced by an air-cooled blown method. In the air-cooled blown method, a mold having an annular lip called a ring die or a crosshead die is installed at the tip of an extruder, and the material is extruded into a tube shape and continuously molded. More specifically, an air hole is provided in the center of the ring die or the like, compressed air is blown from here to expand the tube, and the tube is cooled while being pulled by rollers called pinch rolls and wound up to produce a multi-layer polyethylene film (polyethylene laminated film).

The obtained multi-layer polyethylene film 10 may be subjected to a surface modification treatment to improve post-process suitability as necessary. For example, in order to improve printing suitability or lamination suitability during use as a laminate, a surface modification treatment may be performed on the printing surface or the surface in contact with the substrate. Examples of the surface modification treatment include a treatment of generating functional groups by oxidizing the film surface such as corona discharge treatment, plasma treatment, and flame treatment, and a modification treatment by a wet process of forming an easy-adhesion layer by coating.

When using the multi-layer polyethylene film 10 as a packaging material, it can be used as a laminate in which another layer is further laminated on the multi-layer polyethylene film 10. The laminate may include a vapor-deposited layer, a coating layer, various functional layers, an adhesive layer, an adhesive resin layer, and the like.

### <Package>

The multi-layer polyethylene film and the laminate can be used as a packaging material constituting a package. For example, the multi-layer polyethylene film (laminate) can be used for a flat pouch, a three-side sealed pouch, a fin-sealed pouch, a gusset pouch, a stand-up pouch, a spouted pouch, a pouch with a beak, etc., using the multi-layer polyethylene film as a sealing material.

The present invention relates to, for example, the following inventions.
[1] A multi-layer polyethylene film comprising at least three layers of a first layer, a second layer, and a third layer in this order, wherein
   the softening point of the second layer is higher than the softening point of the first layer and higher than the softening point of the third layer,
   a ratio of the thickness of the second layer to the total thickness of the first layer and the third layer is 1 to 3,
   a temperature at the maximum of the melting peak observed in differential scanning calorimetry of the multi-layer polyethylene film is more than 129°C and less than 134°C, and
   an absolute value of the degree of molecular orientation of the multi-layer polyethylene film is less than 1.07.
[2] The multi-layer polyethylene film according to [1], wherein the melt flow rates at 190°C under a load of 2.16 kg of the polyethylene resins constituting the first layer, the second layer, and the third layer are each 1.5 g/10 min or less.
[3] The multi-layer polyethylene film according to [1] or [2], wherein when the melt flow rates at 190°C under a load of 2.16 kg of the polyethylene resins constituting the first layer, the second layer, and the third layer are designated as MFR₁, MFR₂, and MFR₃, respectively, MFR₁ - MFR₂ ≤ 0.55 g/10 min and MFR₃ - MFR₂ ≤ 0.55 g/10 min.
[4] The multi-layer polyethylene film according to [1] or [2], wherein when the melt flow rates at 190°C under a load of 2.16 kg of the polyethylene resins constituting the first layer, the second layer, and the third layer are designated as MFR₁, MFR₂, and MFR₃, respectively, MFR₂ - MFR₁ ≤ 0.55 g/10 min and MFR₂ - MFR₃ ≤ 0.55 g/10 min.
[5] The multi-layer polyethylene film according to any one of [1] to [4], wherein the density of the polyethylene resins constituting the first layer and the third layer is less than 0.945 g/cm³.
[6] The multi-layer polyethylene film according to any one of [1] to [5], wherein the thicknesses of the first layer and the third layer are 1 µm or more and 10 µm or less.
[7] The multi-layer polyethylene film according to any one of [1] to [6], wherein the thickness of the second layer is 8 µm or more and 30 µm or less.
[8] The multi-layer polyethylene film according to any one of [1] to [7], wherein the softening points of the first layer and the third layer are 120°C or more and 160°C or less.
[9] The multi-layer polyethylene film according to any one of [1] to [8], wherein the softening point of the second layer is 125°C or more and 170°C or less.
[10] The multi-layer polyethylene film according to any one of [1] to [9], wherein the absolute value of the degree of molecular orientation of the multi-layer polyethylene film is 1 or more.

### Examples

Hereinafter, the present invention will be specifically described by way of examples. However, the present invention is not limited only to the following examples.

### <Polyethylene resin>

- Resin A: Density 0.941 g/cm³, MFR 1.30 g/10 min
- Resin B: Density 0.962 g/cm³, MFR 0.85 g/10 min
- Resin C: Density 0.944 g/cm³, MFR 0.45 g/10 min
- Resin D: Density 0.960 g/cm³, MFR 1.00 g/10 min
- Resin E: Density 0.971 g/cm³, MFR 1.20 g/10 min
- Resin F: Mixture of Resin A and Resin E, Density 0.941 to 0.971 g/cm³, MFR 1.20 to 1.30 g/10 min
- Resin G: Mixture of Resin A and Resin B, Density 0.941 to 0.962 g/cm³, MFR 0.85 to 1.30 g/10 min
- Resin H: Density less than 0.96 g/cm³, MFR less than 1 g/10 min
- Resin I: Density 0.926 g/cm³, MFR 0.8 g/10 min
- Resin J: Density 0.937 g/cm³, MFR 1.8 g/10 min

### <Preparation of multi-layer polyethylene film>

### (Examples 1 to 38, Comparative Examples 1 to 15)

Resins shown in Tables 1 to 3 as resins constituting the first layer (layer 1), the second layer (layer 2), and the third layer (layer 3) were each charged into an extruder, melt-kneaded at 190°C, and then the polyethylene resins were introduced from a three-layer die to produce a multi-layer polyethylene film by an air-cooled blown method.

The multi-layer polyethylene film produced in Comparative Example 2 was stretched in the MD direction to produce a stretched multi-layer polyethylene film.

### <Preparation of laminated film>

A metal oxide layer was formed by vapor deposition on the surface of the first layer (layer 1) of the multi-layer polyethylene film produced in each of the Examples and Comparative Examples. Then, a sealant film was dry-laminated on the surface of the metal oxide layer to produce a laminated film.

### <Softening point (probe descent temperature)>

The probe descent temperature (softening point) of each layer of the multi-layer polyethylene film was measured using an atomic force microscope equipped with a nano-thermal microscope composed of a cantilever (probe) having a heating mechanism. Specifically, first, the multi-layer polyethylene film was embedded in a visible light curable resin to obtain a sample for measurement. Then, in a -140°C environment, the sample for measurement was subjected to cross-section cutting along a direction parallel to the TD direction using a diamond knife of a cryo-ultramicrotome. After measuring the thickness of each layer from the cross section of the multi-layer polyethylene film, the softening point (probe descent temperature) of the multi-layer polyethylene film was measured in the following way.

MPF-3D-SA manufactured by Oxford Instruments was prepared as the atomic force microscope, Ztherm manufactured by Oxford Instruments was used as the nano-thermal microscope equipped in the atomic force microscope, and AN2-200 (trade name) manufactured by Anasys Instruments was used as the cantilever. After measuring the shape of the sample in a 10 µm field of view in AC mode, the cantilever was separated from the sample by 5 to 10 µm in the Z direction (normal direction of the sample surface). In this state, the Detrend correction function of the apparatus was performed in contact mode under conditions of a maximum applied voltage of 6 V and a heating rate of 0.5 V/s to correct the change in the amount of deflection (Deflection) of the cantilever due to voltage application. Next, in contact mode, the cantilever was brought into contact with the sample so that the change in Deflection before and after contact between the cantilever and the sample was 0.2 V, and while maintaining the Deflection at a constant value, a voltage was applied to the cantilever under conditions of a maximum applied voltage of 6 V and a heating rate of 0.5 V/s to heat the sample. The displacement of the cantilever in the Z direction at this time was recorded, and the measurement was stopped when the Z displacement turned from rising to falling and fell by 50 nm from the change point. When the Z displacement reached the maximum applied voltage without falling by 50 nm from the change point, the maximum applied voltage during Detrend correction and measurement was increased by 0.5 V and the measurement was performed again. The applied voltage at which the recorded Z displacement was maximum was converted to temperature. This measurement was performed at 10 points within the 10 µm field of view, and the average value of the 10 points was taken as the softening point (probe descent temperature).

A calibration curve was used to convert the applied voltage to temperature. Polycaprolactone (melting point: 60°C), low-density polyethylene (melting point: 112°C), polypropylene (melting point: 166°C), and polyethylene terephthalate (melting point: 255°C) were measured as calibration samples, and a standard curve of applied voltage and temperature was created. Here, the melting point is a melting peak temperature measured by a differential scanning calorimeter (DSC) under a condition of a heating rate of 5°C/min. The method for measuring the softening point (probe descent temperature) of the calibration sample is the same as the measurement of the softening point (probe descent temperature) of the sample described above, but the maximum applied voltage during Detrend correction and measurement was set to 3.5 V for polycaprolactone, 5.5 V for low-density polyethylene, 6.5 V for polypropylene, and 7.8 V for polyethylene terephthalate. The relationship between the melting point and the applied voltage at which the Z displacement becomes maximum when measuring each calibration sample was approximated by a cubic function using the least squares method to create a standard curve, thereby obtaining a calibration curve.

### <Melting peak temperature>

For the multi-layer polyethylene film, differential scanning calorimetry was performed using a differential scanning calorimeter (manufactured by Hitachi, Ltd., trade name DSC7020) in accordance with JIS K7121-1987 under conditions of a measurement temperature of 20 to 200°C and a heating rate of 10°C/min, and the melting peak temperature was read from the obtained curve. The measurement results are shown in Tables 1 to 3.

### <Degree of molecular orientation>

Using a microwave type molecular orientation analyzer (Oji Scientific Instruments Co., Ltd., trade name MOA-5012A), the orientation of molecular chains in the plane of the multi-layer polyethylene film was measured by rotating the multi-layer polyethylene film in a microwave polarized electric field. The measurement results are shown in Tables 1 to 3.

### <Bubble stability>

The vibration of the bubble blown up by the blown method and the appearance of the formed film were visually confirmed, and bubble stability was evaluated based on the following evaluation criteria. The evaluation results are shown in Tables 1 to 3.
A: No vibration of the bubble was seen, and no wrinkles were seen in the appearance of the film after film formation.
B: Vibration of the bubble and slight wrinkles in the film after film formation were seen.
C: Vibration in the bubble and wrinkles that made it difficult to use the film as a packaging material after film formation were observed.

### <Wrinkles>

The appearance of the multi-layer polyethylene film after vapor deposition processing was visually confirmed, and wrinkles were evaluated based on the following evaluation criteria. The evaluation results are shown in Tables 1 to 3.
A: No wrinkles were seen in the appearance of the multi-layer polyethylene film.
B: Slight wrinkles were seen in the appearance of the multi-layer polyethylene film.
C: Many wrinkles were seen in the appearance of the multi-layer polyethylene film.

### <Lamination strength>

The produced laminate was cut into a 15 mm wide strip, and peeled at a peeling speed of 300 mm/min and a peeling angle of 180° using a Tensilon universal material testing machine (manufactured by A&D Company, Limited) in accordance with JIS K6854-2 and ISO8510-2 to measure the lamination strength. The evaluation results are shown in Tables 1 to 3.

**[Table 1]**

| | Layer Composition | | | Thickness (µm) | | | | **Thickness** Ratio | Film **Properties** | | | | Evaluation Results | | |
|---|---|---|---|---|---|---|---|---|---|---|---|---|---|---|---|
| | Layer 1 | Layer 2 | Layer 3 | Layer 1 (W1) | Layer 2 (W2) | Layer 3 (W3) | Total | W2/ (W1+W3) | Melting Peak Temperature (°C) | Probe Descent Temperature Order | Stretching Treatment | Degree of Molecular Orientation | Bubble Stability | Wrinkle | Lamination Strength |
| **Example** 1 | A | F | E | 5.0 | 10.0 | 5.0 | 20.0 | 1.0 | 133.0 | Layer 2>Layer 3>Layer 1 | None | 1.06 | B | B | > 10N |
| Example 2 | A | F | E | 4.0 | 12.0 | 4.0 | 20.0 | 1.5 | 133.0 | Layer 2>Layer 3>Layer 1 | None | 1.06 | B | B | > 10N |
| Example 3 | A | F | E | 3.3 | 13.3 | 3.3 | 20.0 | 2.0 | 133.0 | Layer 2>Layer 3>Layer 1 | None | 1.06 | B | B | > 10N |
| Example 4 | A | F | E | 2.5 | 15.0 | 2.5 | 20.0 | 3.0 | 133.0 | Layer 2>Layer 3>Layer 1 | None | 1.06 | B | B | > 10N |
| Example 5 | A | F | E | 5.0 | 15.0 | 5.0 | 25.0 | 1.5 | 133.0 | Layer 2>Layer 3>Layer 1 | None | 1.06 | B | A | > 10N |
| Example 6 | A | F | E | 6.0 | 18.0 | 6.0 | 30.0 | 1.5 | 133.0 | Layer 2>Layer 3>Layer 1 | None | 1.06 | B | A | > 10N |
| **Example** 7 | A | F | E | 8.8 | 17.5 | 8.8 | 35.0 | 1.0 | 133.0 | Layer 2>Layer 3>Layer 1 | None | 1.06 | B | A | > 10N |
| Example 8 | A | F | E | 7.0 | 21.0 | 7.0 | 35.0 | 1.5 | 133.0 | Layer 2>Layer 3>Layer 1 | None | 1.06 | B | A | > 10N |
| Example 9 | A | F | E | 5.8 | 23.3 | 5.8 | 35.0 | 2.0 | 133.0 | Layer 2>Layer 3>Layer 1 | None | 1.06 | B | A | > 10N |
| Example 10 | A | F | E | 4.4 | 26.3 | 4.4 | 35.0 | 3.0 | 133.0 | Layer 2>Layer 3>Layer 1 | None | 1.06 | B | A | > 10N |
| Example 11 | A | B | G | 5.0 | 10.0 | 5.0 | 20.0 | 1.0 | 132.4 | Layer 2>Layer 3>Layer 1 | None | 1.06 | B | B | > 10N |
| Example 12 | A | B | G | 4.0 | 12.0 | 4.0 | 20.0 | 1.5 | 132.4 | Layer 2>Layer 3>Layer 1 | None | 1.06 | B | B | > 10N |
| Example 13 | A | B | G | 3.3 | 13.3 | 3.3 | 20.0 | 2.0 | 132.4 | Layer 2>Layer 3>Layer 1 | None | 1.06 | B | B | > 10N |
| Example 14 | A | B | G | 2.5 | 15.0 | 2.5 | 20.0 | 3.0 | 132.4 | Layer 2>Layer 3>Layer 1 | None | 1.06 | B | B | > 10N |
| Example 15 | A | B | G | 5.0 | 15.0 | 5.0 | 25.0 | 1.5 | 132.4 | Layer 2>Layer 3>Layer 1 | None | 1.06 | B | A | > 10N |
| Example 16 | A | B | G | 6.0 | 18.0 | 6.0 | 30.0 | 1.5 | 132.4 | Layer 2>Layer 3>Layer 1 | None | 1.06 | B | A | > 10N |
| Example 17 | A | B | G | 8.8 | 17.5 | 8.8 | 35.0 | 1.0 | 132.4 | Layer 2>Layer 3>Layer 1 | None | 1.06 | A | A | > 10N |
| Example 18 | A | B | G | 7.0 | 21.0 | 7.0 | 35.0 | 1.5 | 132.4 | Layer 2>Layer 3>Layer 1 | None | 1.06 | A | A | > 10N |
| Example 19 | A | B | G | 5.8 | 23.3 | 5.8 | 35.0 | 2.0 | 132.4 | Layer 2>Layer 3>Layer 1 | None | 1.06 | A | A | > 10N |
| Example 20 | A | B | G | 4.4 | 26.3 | 4.4 | 35.0 | 3.0 | 132.4 | Layer 2>Layer 3>Layer 1 | None | 1.06 | A | A | > 10N |

**[Table 2]**

| | Layer Composition | | | Thickness (µm) | | | | **Thickness** Ratio | Film Properties | | | | Evaluation Results | | |
|---|---|---|---|---|---|---|---|---|---|---|---|---|---|---|---|
| | Layer 1 | Layer 2 | Layer 3 | Layer 1 (W1) | Layer 2 (W2) | Layer 3 (W3) | Total | W2/ (W1+W3) | Melting Peak Temperature (°C) | Probe Descent Temperature Order | Stretching Treatment | Degree of Molecular Orientation | Bubble Stability | Wrinkle | Lamination Strength |
| Examole 21 | C | D | C | 5.0 | 10.0 | 5.0 | 20.0 | 1.0 | 133.3 | Laver 2 > Laver 1 = Laver 3 | None | 1.06 | B | B | >10N |
| Example 22 | C | D | C | 4.0 | 12.0 | 4.0 | 20.0 | 1.5 | 133.3 | Layer 2 > Layer 1 = Layer 3 | None | 1.06 | B | B | >10N |
| Example 23 | C | D | C | 3.3 | 13.3 | 3.3 | 20.0 | 2.0 | 133.3 | Layer 2 > Layer 1 = Layer 3 | None | 1.06 | B | B | >10N |
| Examole 24 | C | D | C | 2.5 | 15.0 | 2.5 | 20.0 | 3.0 | 133.3 | Laver 2 > Laver 1 = Laver 3 | None | 1.06 | B | B | >10N |
| Example 25 | C | D | C | 5.0 | 15.0 | 5.0 | 25.0 | 1.5 | 133.3 | Laver 2 > Laver 1 = Laver 3 | None | 1.06 | B | A | >10N |
| Examole 26 | C | D | C | 6.0 | 18.0 | 6.0 | 30.0 | 1.5 | 133.3 | Laver 2 > Laver 1 = Laver 3 | None | 1.06 | A | A | >10N |
| Example 27 | C | D | C | 8.8 | 17.5 | 8.8 | 35.0 | 1.0 | 133.3 | Laver 2 > Laver 1 = Laver 3 | None | 1.06 | A | A | >10N |
| Example 28 | C | D | C | 7.0 | 21.0 | 7.0 | 35.0 | 1.5 | 133.3 | Layer 2 > Layer 1 = Layer 3 | None | 1.06 | A | A | >10N |
| Example 29 | C | D | C | 5.8 | 23.3 | 5.8 | 35.0 | 2.0 | 133.3 | Layer 2 > Layer 1 = Layer 3 | None | 1.06 | A | A | >10N |
| Example 30 | C | D | C | 4.4 | 26.3 | 4.4 | 35.0 | 3.0 | 133.3 | Laver 2 > Laver 1 = Laver 3 | None | 1.06 | A | A | >10N |
| Examole 31 | C | H | C | 5.0 | 10.0 | 5.0 | 20.0 | 1.0 | 132.9 | Laver 2 > Laver 1 = Laver 3 | None | 1.06 | B | B | >10N |
| Example 32 | C | H | C | 4.0 | 12.0 | 4.0 | 20.0 | 1.5 | 132.9 | Laver 2 > Laver 1 = Laver 3 | None | 1.06 | B | B | >10N |
| Example 33 | C | H | C | 3.3 | 13.3 | 3.3 | 20.0 | 2.0 | 132.9 | Layer 2 > Layer 1 = Layer 3 | None | 1.06 | B | B | >10N |
| Example 34 | C | H | C | 2.5 | 15.0 | 2.5 | 20.0 | 3.0 | 132.9 | Layer 2 > Layer 1 = Layer 3 | None | 1.06 | A | A | >10N |
| Example 35 | C | H | C | 6.3 | 12.5 | 6.3 | 25.0 | 1.0 | 132.9 | Layer 2 > Layer 1 = Layer 3 | None | 1.06 | A | A | >10N |
| Example 36 | C | H | C | 5.0 | 15.0 | 5.0 | 25.0 | 1.5 | 132.9 | Laver 2 > Laver 1 = Laver 3 | None | 1.06 | A | A | >10N |
| Example 37 | C | H | C | 4.2 | 16.7 | 4.2 | 25.0 | 2.0 | 132.9 | Laver 2 > Laver 1 = Laver 3 | None | 1.06 | A | A | >10N |
| Example 38 | C | H | C | 3.1 | 18.8 | 3.1 | 25.0 | 3.0 | 132.9 | Layer 2 > Layer 1 = Layer 3 | None | 1.06 | A | A | >10N |

**[Table 3]**

| | Layer Composition | | | Thickness (µm) | | | | Thickness Ratio | Film Properties | | | | Evaluation Results | | |
|---|---|---|---|---|---|---|---|---|---|---|---|---|---|---|---|
| | Layer 1 | Layer 2 | Layer 3 | Layer 1 (W1) | Layer 2 (W2) | Layer 3 (W3) | Total | W2/ (W1+W3) | Melting Peak Temperature (°C) | Probe Descent Temperature Order | Stretching Treatment | Degree of Molecular Orientation | Bubble Stability | Wrinkle | Lamination Strength |
| Comparative Example 1 | A | - | - | 30 | - | - | 30.0 | - | 129 | - | None | 1.06 | C | C | >10N |
| Comparative Example 2 | A | E | F | 5 | 10 | 5 | 20.0 | 1 | 133 | Layer 2>Layer 3>Layer 1 | Yes | 1.15 | B | A | 0.9N |
| Comparative Example 3 | A | G | A | 9 | 12 | 9 | 30.0 | 0.67 | 128 | Layer 2>Layer 3>Layer 1 | None | 1.05 | B | C | >10N |
| Comparative Example 4 | E | A | E | 9 | 12 | 9 | 30.0 | 0.67 | 132 | Layer 1=Layer 3>Layer 2 | None | 1.04 | B | C | 4.9N |
| Comparative Example 5 | I | J | I | 5 | 10 | 5 | 20.0 | 1 | 125 | Layer 2>Layer 1=Layer 3 | None | 1.05 | A | C | >10N |
| Comparative Example 6 | A | A | G | 5 | 10 | 5 | 20.0 | 1 | 128 | Layer 2>Layer 3>Layer 1 | None | 1.05 | B | C | >10N |
| Comparative Example 7 | A | A | G | 4 | 12 | 4 | 20.0 | 1.5 | 128 | Layer 2>Layer 3>Layer 1 | None | 1.05 | B | C | >10N |
| Comparative Example 8 | A | A | G | 3.3 | 13.3 | 3.3 | 20.0 | 2 | 128 | Layer 2>Layer 3>Layer 1 | None | 1.05 | B | C | >10N |
| Comparative Example 9 | A | A | G | 2.5 | 15 | 2.5 | 20.0 | 3 | 128 | Layer 2>Layer 3>Layer 1 | None | 1.05 | B | C | >10N |
| Comparative Example 10 | E | A | A | 5 | 10 | 5 | 20.0 | 1 | 132 | Layer 1>Layer 3=Layer 2 | None | 1.04 | B | C | 4.9N |
| Comparative Example 11 | E | A | A | 4 | 12 | 4 | 20.0 | 1.5 | 132 | Layer 1>Layer 3=Layer 2 | None | 1.04 | B | C | 4.5N |
| Comparative Example 12 | E | A | A | 3.3 | 13.3 | 3.3 | 20.0 | 2 | 132 | Layer 1>Layer 3=Layer 2 | None | 1.04 | B | C | 4.7N |
| Comparative Examole 13 | E | A | A | 2.5 | 15 | 2.5 | 20.0 | 3 | 132 | Layer 1>Layer 3=Layer 2 | None | 1.04 | B | C | 4.7N |
| Comparative Example 14 | A | E | F | 6 | 8 | 6 | 20.0 | 0.67 | 133 | Layer 2>Layer 3>Layer 1 | None | 1.06 | B | C | >10N |
| Comparative Example 15 | A | E | F | 2 | 16 | 2 | 20.0 | 4 | 133 | Layer 2>Layer 3>Layer 1 | None | 1.06 | C | - | - |

### Reference Signs List

1... First layer, 2... Second layer, 3... Third layer, 10... Multi-layer polyethylene film.

## Claims

1. A multi-layer polyethylene film comprising at least three layers of a first layer, a second layer, and a third layer in this order, wherein
the softening point of the second layer is higher than the softening point of the first layer and higher than the softening point of the third layer,
a ratio of the thickness of the second layer to the total thickness of the first layer and the third layer is 1 to 3,
a temperature at the maximum of the melting peak observed in differential scanning calorimetry of the multi-layer polyethylene film is more than 129°C and less than 134°C, and
an absolute value of the degree of molecular orientation of the multi-layer polyethylene film is less than 1.07.

2. The multi-layer polyethylene film according to claim 1, wherein the melt flow rates at 190°C under a load of 2.16 kg of the polyethylene resins constituting the first layer, the second layer, and the third layer are each 1.5 g/10 min or less.

3. The multi-layer polyethylene film according to claim 1, wherein when the melt flow rates at 190°C under a load of 2.16 kg of the polyethylene resins constituting the first layer, the second layer, and the third layer are designated as MFR₁, MFR₂, and MFR₃, respectively, MFR₁ - MFR₂ ≤ 0.55 g/10 min and MFR₃ - MFR₂ ≤ 0.55 g/10 min.

4. The multi-layer polyethylene film according to claim 1, wherein when the melt flow rates at 190°C under a load of 2.16 kg of the polyethylene resins constituting the first layer, the second layer, and the third layer are designated as MFR₁, MFR₂, and MFR₃, respectively, MFR₂ - MFR₁ ≤ 0.55 g/10 min and MFR₂ - MFR₃ ≤ 0.55 g/10 min.

5. The multi-layer polyethylene film according to any one of claims 1 to 4, wherein the density of the polyethylene resins constituting the first layer and the third layer is less than 0.945 g/cm³.

6. The multi-layer polyethylene film according to any one of claims 1 to 4, wherein the thicknesses of the first layer and the third layer are 1 µm or more and 10 µm or less.

7. The multi-layer polyethylene film according to any one of claims 1 to 4, wherein the thickness of the second layer is 8 µm or more and 30 µm or less.

8. The multi-layer polyethylene film according to any one of claims 1 to 4, wherein the softening points of the first layer and the third layer are 120°C or more and 160°C or less.

9. The multi-layer polyethylene film according to any one of claims 1 to 4, wherein the softening point of the second layer is 125°C or more and 170°C or less.

10. The multi-layer polyethylene film according to any one of claims 1 to 4, wherein the absolute value of the degree of molecular orientation of the multi-layer polyethylene film is 1 or more.
